(19) Europäisches Patentamt
European Patent Office
Office européen des brevets

(11) Publication number: **0 035 897**
**B1**

(12) **EUROPEAN PATENT SPECIFICATION**

(45) Date of publication of patent specification: **13.02.85**

(51) Int. Cl.$^4$: **C 08 G 63/30,** C 08 G 63/18, C 08 G 63/22

(21) Application number: **81300961.0**

(22) Date of filing: **06.03.81**

(54) **Process for preparation of linear aromatic polyester by transesterification polymerization.**

(30) Priority: **10.03.80 US 128743**

(43) Date of publication of application:
**16.09.81 Bulletin 81/37**

(45) Publication of the grant of the patent:
**13.02.85 Bulletin 85/07**

(84) Designated Contracting States:
**BE DE FR GB IT NL**

(56) References cited:
**GB-A- 905 994**
**US-A-3 946 091**
**US-A-3 948 856**

**ENCYCLOPEDIA OF POLYMER SCIENCE AND TECHNOLOGY, vol. 11, 1969, INTERSCIENCE PUBLISHERS, New York, pages 92 to 94**

(73) Proprietor: **OCCIDENTAL CHEMICAL CORPORATION**
**P.O. Box 189**
**Niagara Falls New York 14302 (US)**

(72) Inventor: **Rosenfeld, Jerold C.**
**18 Willowgreen Drive**
**Tonawanda New York 14150 (US)**

(74) Representative: **Myerscough, Philip Boyd et al**
**J.A.Kemp & Co. 14, South Square Gray's Inn**
**London, WC1R 5EU (GB)**

**EP 0 035 897 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to transesterification polymerization reactions for preparing linear aromatic polyesters comprising monomer residues of a bisphenol, e.g. bisphenol A, and of a diaryl ester dicarboxylic acid e.g. diphenyl terephthalate and/or diphenyl isophthalate. Such reactions are generally carried out employing a liquid mixture of the aforementioned reactants. At least one of the reactants, usually the bisphenol, is normally solid, i.e. a reactant melting above ambient temperature, e.g. 30°C. The minimum temperature required for onset of transesterification depending on the particular reactants employed, is a temperature in the range of above about 100 to about 300°C. For example, the temperature required for onset of the reaction of bisphenol A, diphenyl isophthalate and diphenyl terephthalate is about 160°C.

It is also known to employ for the transesterification reaction catalysts including basic catalysts, i.e. catalysts producing a basic effect toward conventional acid-base indicators when dissolved in a polar ionizing solvent such as water. According to prior art techniques for carrying out the transesterification employing a basic catalyst with the aforementioned reactants, the catalyst and the reactants are mixed and heated together to provide a liquid mixture of the reactants containing the catalyst which if necessary is, subsequently further heated to the aforementioned minimum temperature required for onset of transesterification. For example U.S. Patent 3,946,091 describes in Col. 14, preparation of a polyester from bisphenol A, diphenyl isophthalate and diphenyl terephthalate employing the normally solid compound, potassium borohydride as catalyst. In the patentee's process, the solid catalyst is indicated as being mixed with the mixture of normally solid reactants before the reactant-catalyst mixture is heated at elevated temperature to melt solid reactants and bring about transesterification.

It has been discovered that when a basic catalyst is employed with reactants in a process in which the catalyst is in contact with any or all of the reactants at elevated temperature below that required for onset of the reaction so that the reactants, in contact with the catalyst, are exposed to elevated temperatures prior to onset of transesterification, the polyester product of the transesterification polymerization reaction is characterized by serious disadvantages which limit the use of the polyester. This situation particularly prevails when at least one of the reactants is required to be melted to provide a liquid transesterification reaction mixture. The resultant polyester is of relatively deep coloration and hence unsuitable for many applications where a light colored or substantially colorless polyester is desirable. The product polyester may be of relatively low molecular weight. Such product discoloration generally is greater the longer is the period of contact between the reactants and the basic catalyst during reactant melting or during heating of the reactants to reach the aforementioned minimum temperature required for onset of transesterification. According to British Patent 905,994, bisphenols are known to decompose to the corresponding alpha-alkenylphenol at 220°—300°C. in the presence of solid alkaline catalysts; e.g. basic compounds such as alkali metal and alkaline earth metal hydrides, hydroxides etc., some of which e.g. LiOH are normally solid basic transesterification catalysts. However, this patent does not teach or suggest that the aforementioned alpha-alkenylphenol decomposition or products would have a deleterious effect on a transesterification preparation of the polyester of said bisphenol and a dicarboxylic acid.

### SUMMARY OF THE INVENTION

The invention relates to improvements in the process for preparation of a linear aromatic polyester by transesterification polymerization of monomer reactants comprising a bisphenol and a diaryl ester of a dicarboxylic acid in the presence of a basic catalyst for said polymerization wherein the reactants are in the liquid state prior to introduction to the polymerization reaction. The basic catalyst is generally an ionic compound of normal melting point above ambient temperature, i.e., 30°C.

One aspect of the invention comprises conducting the polymerization in the presence of a basic catalyst which is normally a solid at 30°C., and involves charging said catalyst to the polymerization reaction in liquid form. The liquid catalyst includes a normally solid material in molten form or as a solution in a liquid solvent for the catalyst. Solvents include compounds which are normally liquid at ambient conditions of temperature and pressure and compounds that melt at a temperature below the temperature at which the catalyst is introduced to the process. Use of the basic catalyst in liquid form in accordance with the invention unexpectedly accelerates the initial portion of the transesterification reaction. Use of the basic catalyst in liquid form facilitates metered introduction of the basic catalyst into the transesterification reaction, and avoids excessive contact of the catalyst with moisture in the atmosphere.

Another aspect of the invention comprises introducing the catalyst and the liquid reactants substantially concurrently to the polymerization reaction. Addition of the basic catalyst concurrent with addition of the liquid reactants avoids maintaining a reactant or reactants in contact with the basic catalyst prior to onset of transesterification. The improved process is particularly useful when at least one of the reactants is normally a solid and must be melted. In accord with the invention, the normally solid reactant is melted prior to mixing with the catalyst, and introduction to the reaction. The product polyester is of improved color, i.e. of lighter color, than that obtained when one or more of the reactants is melted in the presence of said basic catalyst.

Preferably, the liquid form basic catalyst of the invention is introduced concurrently with introduction

of liquid reactants into the transesterification reaction to avoid heating of the reactants in contact with the catalyst prior to onset of the transesterification reaction.

It is especially preferred to carry out the transesterification in a fully continuous process or to carry out the transesterification in a semi-continuous process, employing an initial batchwise prepolymerization reaction, followed by continuous reaction using a wiped film reaction vessel. The latter process results in a product of unexpectedly low polydispersity, and other valuable properties.

A. *Reactants*

The process of the invention employs a diester of a dicarboxylic acid and monohydroxy aromatic compound of the benzene or naphthalene series of 6 to 20 carbon atoms.

Examples of monohydroxy aromatic compounds are disclosed in EPC Applications 80301865.4 and 80301867.0 (Publications Nos. 0021652A and 0021654A). Preferred is a monohydroxy compound of the benzene series especially phenol.

The dicarboxylic acids which are useful in the process are also well known and can be represented by the formula:

$$HX—\overset{\overset{O}{\|}}{C}—(Z)_n—\overset{\overset{O}{\|}}{C}—XH$$

in which X is oxygen or sulfur, Z is alkylene, —Ar— or —Ar—Y—Ar— where Ar has the same definition as given with respect to the bisphenols, Y is alkylene, of 1 to 10 carbons, haloalkylene, —O—, —S—, —SO—, —$SO_2$—, —$SO_3$—, —CO—, GP<= O or GN<, n is 0 or 1, and G is alkyl, haloalkyl, aryl, haloaryl, alkylaryl, haloalkylaryl, arylalkyl, haloarylalkyl, cycloalkyl, and halocycloalkyl. Illustrative aromatic and aliphatic dicarboxylic acids are disclosed in U.S. Patent 4,126,602. Most preferably, the dicarboxylic acid component comprises a mixture of about 60 to about 100 mol percent isophthalic acid and about 40 to about 0 mol percent terephthalic acid. Diesters of an aromatic dicarboxylic acid which in general are normally solids, i.e. solids at ambient temperature, are preferably employed.

The bisphenols useful in the invention are disclosed in U.S. Patent 4,126,602. Generally, the bisphenols which can be used in this process are known in the art and correspond to the general formula:

$$HO—\underset{\underset{T_b}{|}}{Ar}—\underset{\underset{G_m}{|}}{(E)_x}—\underset{\underset{T'_b}{|}}{Ar}—OH$$

wherein Ar is aromatic, preferably containing 6—18 carbon atoms (including phenyl, biphenyl and naphthyl); G is alkyl, haloalkyl, aryl, haloaryl, alkylaryl, haloalkylaryl, arylalkyl, haloarylalkyl, cycloalkyl, and halocycloalkyl; E is a divalent (or di-substituted) alkylene, haloalkylene, cycloalkylene, halocycloalkylene, arylene, or haloarylene, —O—, —S—, —SO—, —$SO_2$—, —$SO_3$—, —CO—, GP<= O or GN<; T and T′ are independently selected from the group consisting of halogen, such as chlorine or bromine, G and OG; m is an integer from 0 to the number of replaceable hydrogen atoms on Ar; b is an integer from 0 to the number of replaceable hydrogen atoms on Ar, and x is 0 or 1. When there is a plurality of G substituents in the bisphenols, such substituents may be the same or different. The T and T′ substituents may occur in the ortho, meta or para-positions with respect to the hydroxyl radical. The foregoing hydrocarbon radicals preferably have carbon atoms as follows: alkyl, haloalkyl, alkylene and haloalkylene of 1 to 14 carbons; aryl, haloaryl, arylene and haloarylene of 6 to 14 carbons; alkylaryl, haloalkylaryl, arylalkyl and haloarylalkyl of 7 to 14 carbons; and cycloalkyl, halocycloalkyl, cycloalkylene and halocycloalkylene of 4 to 14 carbons; Additionally, mixtures of the above described bisphenols may be employed to obtain a polymer with especially desired properties. The bisphenols generally contain 12 to about 30 carbon atoms, and preferably 12 to about 25 carbon atoms. The bisphenols and bisphenols are in general normally solids. The preferred bisphenol is commonly called bisphenol A.

The conventional reaction practice for carrying out the transesterification preparation of the present polyesters is described in EPC Applications Nos. 80301865.4 and 80301867.0. There is generally employed a molar amount of dicarboxylic acid reactant, i.e. the diaryl ester, which is stoichiometrically equivalent to molar amount of the hydroxylic reactant, i.e. the bisphenol employed. If a carboxylate ester group-terminated polyester product is desired, a molar excess of diaryl ester over the hydroxylic reactant e.g. up to about a 5 molar percent of more excess of the diaryl ester over the aforementioned stoichiometric equivalent proportion of diaryl ester is employed. Likewise, if a hydroxy group-terminated polyester is desired the bisphenol and any glycol modifier is charged in a similar molar excess over the aforementioned stoichiometrically equivalent proportion of the hydroxylic reactant is employed. If a specially end-capped polyarylate is desired, such as in aforesaid EPC applications Nos. 80301865.4 and 80301867.0 and also EPC application No. 80301866.2 (Publication 0021653A), the appropriate end-capping reagent is introduced at an appropriate time in the process.

Since one or more of the aforementioned reactants is normally a solid it is generally necessary to melt the reactant prior to introduction of the reactants to the polymerization reaction which is carried out in molten state. Normally solid reactants can be individually melted and subsequently mixed together prior to

their addition to the polymerization, but is preferred to mix the reactants together and subsequently melt the reactants since the mixture of solid reactants generally melts at a temperature lower than the melting point of any individual solid reactant. Use of latter preferred embodiment generally conserves energy employed to melt the normally solid reactants.

Optional aliphatic glycol modifier reactants, include difunctional aliphatic glycol of 2 to 100 carbon atoms which include glycols which are normally liquids and glycols which are normally solids. Illustrative examples of glycol modifiers are disclosed in U.S. Patents 4,126,602; 4,137,270; 3,399,170 and British Patent 924,697. Preferred glycol modifiers of 2 to 20 carbon atoms are normally liquids. Glycols having primary hydroxy groups are especially preferred.

B. *Catalyst*

The catalyst used in the invention is a basic catalyst, that is, a compound that provides a basic, preferably a strongly basic reaction to conventional acid-base indicator when dissolved in an ionizing polar solvent such as water.

The catalyst is added to the reaction preferably in liquid form as a normally solid material in the molten state or dissolved in a solvent. When the catalyst is added concurrently with liquid reactants, the catalyst can be added as a solid, preferably in pulverulent form especially as fluid pulverulent mass i.e. a powder or suspension in which the particulate solid catalyst is dispersed in a sufficient amount of an inert liquid (of type described below) to provide a blend mass.

Suitable basic catalysts include the alkali metals, such as lithium, sodium, potassium, rubidium and cesium; and the carbonates, hydroxides, hydrides, borohydrides, phenates, bis-phenates (i.e. salt of a bisphenol or biphenol), carboxylates such as acetate, or benzoate, oxides of the foregoing alkali metals. Group II and III elements can also be used in place of the alkali metals of the foregoing classes of compounds such as metals and compounds of calcium, magnesium and aluminum. Other bases include trialkyl or triaryltin hydroxides, acetates and phenates.

Examples of catalysts are lithium, sodium, potassium, rubidium and cesium metals, potassium or rubidium carbonate, potassium hydroxide, lithium hydride, sodium borohydride, potassium borohydride, calcium acetate, magnesium acetate, aluminum triisopropoxide, and triphenyltin hydroxide.

Phenol is the preferred solvent for the normally solid catalysts. Substituted phenols which can be used include those having the formula

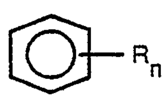

wherein R is alkyl of 1 to 10 carbon atoms; alkoxy of 1—10 carbon atoms, aryl of 6 to 10 carbon atoms, chloro, bromo or mixtures thereof, and wherein n is 1 or 2.

Typical solvents include o-benzylphenol, o-bromophenol, m-bromophenol, m-chlorophenol, p-chlorophenol, 2,4-dibromophenol; 2,6-dichlorophenol, 3,5-dimethoxyphenol, o-ethoxyphenol, m-ethylphenol, o-isopropylphenol, m-methoxyphenol, m-propylphenol and p-propylphenol.

Other solvents which are particularly useful are of the ether type, for example tetrahydrofuran and the various glymes, for example ethylene glycol dimethylether; liquid phosphites such as triphenyl phosphite and tris(nonylphenyl) phosphite, and phosphates such as trimethyl phosphate are also useful as diluents.

Combinations of catalysts and combination of phenol or phenols and solvents may also be used.

Especially preferred basic catalysts for use in the invention are metal phenoxides in solution in phenol, e.g. rubidium phenoxide dissolved in molten phenol, potassium phenoxide dissolved in molten phenol or potassium borophenoxide dissolved in molten phenol.

The bisphenol reactant and the diaryl ester reactant are preferably substantially free of impurities, for example, those arising from oxidation of the reactants via contact of the reactants with oxygen-containing gas, e.g. air. Preferably reactants are maintained under nitrogen prior to and during the reaction to provide monomer reactants substantially free of the aforementioned impurities.

C. *The Conventional Transesterification Process*

The solid reactants are heated above about 100°C., preferably above about 160°C. to melt the reactants. Onset of reaction in the presence of catalyst is generally at a temperature ranging from above about 100°C. to about 275°C., for example above about 160°C. for reaction of bisphenol A, diphenyl terephthalate and diphenyl isophthalate. Reaction temperature employed is generally above about 100°C. to about 400°C. or higher, preferably above about 175°C. to about 350°C., more preferably about 175°C. to about 330°C. with the reaction temperature being raised gradually during the polymerization.

In the transesterification reaction, the aryl group of the diester is displaced as the corresponding monohydroxy aromatic compound, e.g. phenol, for which provision is made for removal e.g. by distillation from the reaction mixture during the transesterification. Reaction pressure is generally diminished during the reaction, e.g. from atmospheric pressure to a subatmospheric pressure, e.g. of about 0.1 mm. of mercury or lower, to aid in the aforementioned removal of the monohydroxy aromatic compound.

Generally it is preferable in accord with the prior art to carry out reaction in two stages. The first or prepolymerization stage is carried out at above about 100°C. to about 350°C. preferably about 160°C. to

about 330°C., especially about 180°C. to about 300°C. to prepare a low molecular weight polyester or prepolymer of relatively low intrinsic viscosity e.g. of less than about 0.1 to about 0.3 dl./g. A subsequent polymerization stage in which the prepolymer is heated at a somewhat higher temperature namely at above about 200°C. to about 400°C. or higher, preferably at about 225°C. to about 350°C., especially at about 275°C. to about 330°C.

Conveniently the polymerization stage is carried out in a different reaction vessel from that employed in the prepolymerization reaction stage with effective agitation of reaction mixture in both stages with generally more extreme agitation being used in the polymerization. When a polyester of a bisphenol and a dicarboxylic acid is prepared employing a glycol with a portion of the dicarboxylic acid to prepare a glycol-dicarboxylic acid ester oligomer, such an oligomer can be used to prepare the polyester by transesterification of the oligomer with the bisphenol and the diaryl reactants as described in U.S. Patent 4,137,278. Since a basic transesterification catalyst can be employed in the latter reaction, the catalyst can be added concurrent with the oligomer and the bisphenol in accordance with this invention.

Conventional proportions of catalyst and reactants are employed. The catalyst is employed in a catalytically effective amount, for example about 0.005 to about 2 mole percent or more, preferably about 0.01 to about 1 mole percent based on the bisphenol component. The reactants are generally employed in a molar amount of dicarboxylic acid reactants, i.e. the diaryl ester, which is stoichiometric equivalent to molar amount of the hydroxylic reactants, i.e. the bisphenol and any glycol modifier used. If a carboxylate ester group-terminated polyester product is desired, a molar excess of diaryl ester over the hydroxylic reactant e.g. up to about a 5 molar or more excess of the diaryl ester over the aforementioned stoichiometric equivalent proportion of diaryl ester is employed. Likewise, if a hydroxy group-terminated polyester is desired the bisphenol and any glycol modifier is charged in a similar molar excess over the aforementioned stoichiometrically equivalent proportion of the hydroxylic reactant is employed.

Conventional processes of the transesterification are described in aforementioned EPC applications 80301865.4 and 80301867.0, British Patent 924,697 and U.S. Patents 3,399,170 and 4,137,278, K. Eise et al., German Publ. Appl. 3,232,877 and G. Bier, *Polymer 15,* 527—535 (1974).

D. *Improved Process of the Invention*

The present invention employs substantially the same reaction conditions i.e. reaction temperatures and pressures, reaction stages, proportions of catalyst and reactants as employed in conventional transesterification preparation of the polyester. According to the improvement of the invention, prior to catalyst addition, the normally solid reactant or reactants are first melted to provide molten reactants, and then are heated, if necessary, to a temperature sufficient for onset of transesterification before addition of the catalyst. This avoids any heating of molten reactant in contact with catalyst prior to the onset of the transesterification reaction.

Concurrent introduction of the molten reactants and the catalyst can be accomplished in any suitable way. For example, individual molten reactants can be added separately with the catalyst to the polymerization. Preferably, the molten reactants can be first mixed together, and then added concurrently with the catalyst to the polymerization. In accordance with the latter preferred mode of concurrent addition, it is especially preferred to mix and subsequently melt the reactants prior to concurrent addition with catalyst since the mixture of solid reactants generally melts at a temperature lower than the melting point of any individual solid reactant. Use of the latter especially preferred embodiment generally conserves energy employed to melt the reactants. Concurrent addition of the basic catalyst and liquid reactants does not preclude intermittent addition of the catalyst i.e. a portion of the basic catalyst used in the transesterification reaction may be added concurrently with the introduction of the molten reactants with the remainder of the catalyst being added subsequent to the introduction of the molten reactants, i.e. during the course of the transesterification polymerization.

The temperature of the catalyst immediately prior to concurrent addition thereof with the molten normally solid reactants is not especially critical. The catalyst may be at ambient temperature or at a suitable elevated temperature as may be required to provide a molten or liquid basic catalyst as described hereinbefore.

It is preferred to carry out preparation of a polyester according to the invention employing a prepolymerization stage and a polymerization stage of which can be effected in one, two, three or more reaction vessels in series in each of these two stages. Batchwise transesterification is preferably carried out in the aforementioned two stages employing a single vessel in each of these two stages. The all batch process can also be carried out in an extruder such as disclosed in U.S. Patent 3,335,111.

Preferably the reaction to prepare a polyester consisting of bisphenol and dicarboxylic acid is carried out employing a batchwise mode in the prepolymerization stage with continuous mode in the polymerization stage employing a countercurrent flow, mechanically agitated, thin film reaction vessel or vessels therein, (termed semi-continuous mode of polymerization) or by carrying out both the prepolymerization and polymerization reaction stages entirely by a continuous mode of polymerization (Termed continuous mode of polymerization). Both the aforementioned semi-continuous and continuous transesterification processes are disclosed in copending EPC application No. 81300958.6 (Publication No. EP—A—35895), filed on even date herewith.

In the aforementioned semi-continuous transesterification procedure, the prepolymerization stage is

preferably effected in one reaction vessel connected in series with a surge tank to feed the polymerization stage. The continuous polymerization stage is effected in two thin film reactors, e.g. wiped thin film reactors, connected in series. Transesterification polymerization preparation of the polyester by the aforementioned continuous reaction desirably employs two agitated tank reaction vessels connected in series in the prepolymerization stage and two reaction vessels connected in series, e.g. the aforementioned thin film reactors, in the polymerization stage. An especially preferred mode of carrying out the transesterification preparation of a polyester according to the invention employs a basic catalyst added as a liquid, together with the above-described semi-continuous and fully continuous reaction mode technology of aforementioned copending EPC application No. 81300958.6.

E. *The Polyester Products of the Invention*

The foregoing preferred embodiment of the invention wherein a liquid basic catalyst and the aforementioned semi-continuous reaction mode is used provides a product of an unexpectedly low polydispersity D. D. is $\overline{M}w/\overline{M}n$, wherein $\overline{M}w$ is the weight average molecular weight of the polyester product and $\overline{M}n$ is the number average molecular weight of the polyester product. Polydispersity, also known as polydispersity index, heterogeneity ratio, non-uniformity coefficient or dispersion index, is discussed at page 78 of F. W. Billmeyer Jr., "Textbook of Polymer Science", Second Edition, Wiley Interscience, 1971; and at page 332 of E. M. McCaffery "Laboratory Preparation for Macromolecular Chemists", McGraw—Hill Book Co., 1970.

The polydispersity of a linear condensation polymer such as polyester of a bisphenol and a dicarboxylic acid, is a known measure of the spread of the product molecules' molecular weight distribution. A low value in the range of about 2.0 to about 2.3 for D indicates a narrow molecular weight distribution and is known to be characteristic of linear products of batch condensation polymerization as indicated by K. G. Denbigh, *Trans. Faraday Soc. 43* 648 (1947). A high value for D, e.g., ranging from about 2.5 to about 6 or higher, is known to be characteristic of linear products of continuous or semi-continuous polymerization.

Unexpectedly, the polyester product of the foregoing preferred embodiment of the invention, although prepared employing a semi-continuous polyesterification reaction process has a low polydispersity i.e. a polydispersity indicative of a narrow molecular weight distribution, characteristic of a product of batch polymerization. The polyester product of low polydispersity obtained by the aforementioned preferred embodiment of the invention using a semi-continuous mode of reaction with a liquid basic catalyst is generally additionally characterized by enhanced impact strength, lower gel concentrations and lower free monomer concentrations, properties which heretofor could be obtained only with the corresponding polyester of low polydispersity prepared by the batch mode of transesterification polymerization. However, as is well known, batch melt mode preparation is commercially undesirable for large scale production of polymers such as the polyesters of bisphenols and dicarboxylic acids. In addition to the known advantageous properties of conventional linear aromatic polyesters of bisphenols and dicarboxylic acids, the present product is generally characterized by improved color i.e. lower color than corresponding product resulting from addition of basic catalyst according to conventional techniques, e.g. catalyst addition prior to or concurrent with, melting of reactants.

Products of outstanding properties are also produced by the continuous transesterification polymerization process. Moreover, the continuous mode of the present process permits the product polydispersity to be varied, i.e. increased or broadened, by change of the reaction conditions in contact to the corresponding batch process. By varying reaction conditions which effect residence time distribution of the reacting mass, the product polydispersity can be varied.

As used herein, the polymer viscosities are as defined at page 717—719 of "Encyclopedia of Polymer Science and Technology", edited by Mark and Gaylord, Vol. 14, Interscience Publishers (Wiley & Sons), 1964.

ILLUSTRATIVE EXAMPLES

Example 1

A. *Catalyst Preparation*

Approximately 800 cc. molten phenol is charged to a one-liter 3-necked flask, put under a blanket of dry nitrogen with mechanical agitation and heated to reflux. The phenol is distilled through a 15 cm. Vigreaux column at atmospheric pressure and a center cut of about 500 cc. phenol is taken.

88.1 grams of the distilled phenol is transferred to a 250 cc. 3-necked flask with a nitrogen inlet, mechanical stirrer and a Y-tube with thermometer and drying tube (filled with Drierite). The system is put under a blanket of dry nitrogen and heated to 70°C. 1.00 grams $KBH_4$ is added. After about 20 minutes, most of the solid is in solution, the temperature is 55°C., and 3.23 grams more of $KBH_4$ is added. After two hours more, the reaction temperature is at 71°C. and the solution is clear and water-white and is allowed to cool.

B. *Prepolymer Preparation*

4.61 moles (1052.5 grams) bisphenol A, 3.46 moles (1100.6 grams) diphenyl isophthalate and 1.15 moles (366.9 grams) diphenyl terephthalate are dried overnight in a vacuum oven at about 75°C. and

several mm. Hg. and charged to a 5-liter resin kettle equipped with a nitrogen inlet, mechanical stirrer, thermometer and combination Vigreaux column-distillation head with a 3-liter flask cooled in ice-water as the receiver. The reaction mixture is heated to 186°C. with a heating mantle so that all reactants are in the liquid state. Then 2.5 cc. (0.002305 moles/catalyst) of the above molten $KBH_4$ phenol solution was added with a warmed syringe under a blanket of dry nitrogen. Phenol is removed steadily over about 3 hours at 190 to 255°C. and under vacuum applied gradually down to about 1 mm. Hg. The clear light yellow prepolymer is then poured into a aluminum foil lined glass tray. Intrinsic viscosity is 0.19 dl./g. (sym.-tetrachloroethane, 30°C.). The prepolymer is very light, slightly hazy and brittle. 798.1 grams of phenol is collected in the receiver.

C. *Polymerization*

The above prepolymer is crushed and 1500 grams charged to a 2-gallon, oil heated, stirred reactor. The reactor is put under a blanket of nitrogen and left to sit overnight.

Vacuum is applied to the reactor. The reaction mixture is heated to 290°C. over 2.1 hours (stirring at 5 rpm, began at 1.0 hour and 139°C.) at which point the vacuum is 0.6 mm. Hg. The polymerization is continued under these conditions (temperature 295°C., 0.6 mm., 5 rpm) for 4.3 hours then the reactor is opened and the viscous, light yellow, clear polymer is removed. When cool, the polymer is clear and very tough and has an intrinsic viscosity of 0.61 (syn.-tetrachloroethane, 30°C.).

Examples 2—5

The process of Example 1 is repeated using different catalysts and conditions which are set forth in Table 1, together with the intrinsic viscosities of the resulting polyester product.

TABLE 1

| | Catalyst Preparation | | | | | | Prepolymer Preparation | | Polymer Preparation | |
|---|---|---|---|---|---|---|---|---|---|---|
| Example | Catalyst Ingredient | Solvent | Time to Dissolve | Temp. °C. | Conc. Equiv. per cc. Solution | Nominal Catalyst | Catalyst Level (2) | Intrinsic Viscosity (3) | Time (hrs.) at 290–300°C. | Intrinsic Viscosity (3) |
| 1 | $KBH_4$ | Phenol | 2.5 hr. | 39–71 | 0.00093 | Potassium Borophenoxide | 0.05 | 0.19 | 4.3 | 0.61 |
| 2 | Lithium | Phenol Tetrahydro-furan (1) | 2.0 hr. | Warmed | 0.00051 | Lithium Phenoxide | 0.05 | 0.15 | 7.2 | 0.62 |
| 3 | NaOH | Phenol | 35 min. | Room Temp. to 130°C. | 0.00050 | Sodium Phenoxide | 0.05 | 0.17 | 6.0 | 0.57 |
| 4 | $K_2CO_3$ | Phenol | 50 min. | Room Temp. to 132°C. | 0.00050 | Potassium Phenoxide | 0.05 | 0.17 | 5.0 | 0.63 |
| 5 | $Rb_2CO_3$ | Phenol | 17 min. | Room Temp. to 100°C. | 0.00050 | Rubidium Phenoxide | 0.05 | 0.17 | 3.5 | 0.65 |

(1) 1521.2 ml. THF and 284 g. phenol.

(2) mole percent based on moles bisphenol A.

(3) dl./g. measured in sym. tetrachloroethane at 30°C.

Examples 6—10 compare the results of adding the catalyst before melting the reactants (Examples 6 and 7) with the inventive steps of concurrent addition of catalyst and liquid reactants.

Example 6 (control)

0.0500 moles (5.21 grams) neopentyl glycol, 0.0513 moles (11.69 grams) bisphenol A and 0.1000 moles (31.80 grams) diphenyl terephthalate are charged to a small glass tube shaped reactor (with oil heated jacket) with a gas inlet, a mechanically driven glass stirrer with a flat, circular tip and a curved tube leading to a trap. The system is put under nitrogen blanket. 0.3 cc. (0.00015 moles) of a solution of lithium metal in phenol-tetrahydrofuran solvent is added to the reaction mixture and the mixture heated to 230°C. with stirring. Vacuum is applied gradually over about one hour at 230°C. to 0.15 mm. Hg. then heated for an additional 30 minutes at about 0.13 mm. The product is then removed from the reactor. It is light in color with a slight haze, but has some dark particles in it.

Example 7 (control)

The reaction is set up and heated to 230°C. as above and checked appearance. Black particles are observed floating in the monomers and the run is terminated.

Example 8

The monomers are charged as above but not the catalyst. The reaction mixture was heated to 210°C. and then the catalyst is added to the molten reactants and the polymerization begun. Phenol is removed over 1.25 hours with increasing vacuum at 230 to 240°C. and the product is clear (slight haze), light yellow. No black specks are observed. Intrinsic viscosity at the polymer is 0.33 dl./g. (sym.-tetrachloroethane, 30°C.).

A thin film polymerization is run by distributing 0.7 grams of the above prepolymer (0.33 dl./g.) around the bottom of a 250 cc. round-bottom flask and heating in an oil heated bath at 310°C. for 10 minutes at about 0.1 mm. Hg. The resulting polymer is scraped out of the flask while still soft. It is clear, light yellow and tough with intrinsic viscosity of 0.59 dl./g.

Example 9

Using 0.106 moles (22.81 grams) bisphenol A, 0.050 moles (15.92 grams) diphenyl isophthalate and 0.50 moles (15.92 grams) diphenyl terephthalate are charged to the reactor as above and melted at 210°C. and then 0.3 cc. catalyst solution is added and the polymerization carried out as above. No black specks are observed. The product had the following properties.

Prepolymer: clear, light yellow 0.27 dl./g.
Polymer: clear, light yellow 0.93 dl./g. after 10 min. 310°C.
clear, light yellow 1.23 dl./g. after 30 min. 310°C.

Example 10

The process is repeated as in Example 9 using 0.1 cc. catalyst solution. The following results are obtained.

Prepolymer: light, cloudy 0.29 dl./g.
Polymer: light, slightly hazy 0.58 dl./g. after 10 min., 310°C.
light, slightly hazy 0.74 dl./g. after 30 min., 310°C.

Example 11

Following describes the process of the invention using the semi-continuous mode.

In an agitated 10 U.S. gallon (38 $dm^3$) melt tank, equipped with a turbine agitator and inert gas supply, 60.65 g moles diphenyl isophthalate, 20.25 g-moles of diphenyl terephthalate and 81.25 g-moles of bisphenol A are melted. This and all subsequent vessels/reactors are heated by circulating hot oil (Therminol 66) in their jackets in a controlled manner. Internal temperature of the melt tank is maintained at 180°C. ± 5°C. A slow stream of dry nitrogen was purging in the melt tank throughout the run. The molten monomers are then transferred to a 10 U.S. gallon (38 $dm^3$) stainless steel stirred tank reactor. The transfer is done by pressuring the melt tank to 2—3 atm (2—3 × 101 kPa) gauge and opening a bottom valve. A liquid catalyst for the process was prepared by forming a solution by reacting $KBH_4$ with purified phenol. The resulting catalyst solution was employed at the level of 0.05 mol percent by $KBH_4$ based on the moles of bisphenol A. The catalyst was added to the stirred tank reactor in a liquid form. The internal temperature of the reactor is increased to 280°C. over a period of 2 hours and 15 minutes, while at the same time the inernal pressure is reduced to 70 mm. Hg. During this time the byproduct phenol is continuously distilled off. At the end of this reaction time, a sample is collected and the intrinsic viscosity determined to be 0.175 ± 0.005 dl./g. The material is then transferred to a stirred surge tank by pressurizing the reactor and opening the bottom valve. The holding tank is maintained at a atmospheric pressure and 260 ± 5°C. and under constant nitrogen purge. The prepolymer is then continuously fed through a metering gear pump to the top feed port of a filmtruder, type HM, with a 5.4 square feet (0.5 $m^2$) of heating surface, from

Luwa Corp. The internal temperature, pressure and rotor speed maintained in this first filmtruder is 295°C., 4 mm. Hg. and 140 rpm, respectively. The material is continuously pumped out of the bottom and fed to a second filmtruder of type HS of the same size. The internal temperature, pressure and rotor speed in the second filmtruder is maintained at 305°C., 1 mm. Hg. and 100 rpm, respectively. Under these conditions and at a capacity of 20 lbs (9 kg) per hour a polyester with a weight average molecular weight of 27,800 and polydispersity of 2.2 is produced.

The properties of the polyester product are as follows:

| | |
|---|---|
| Tensile Strength, psi | 10158 (7.142 × $10^6$ kg/m$^2$) |
| Tensile Modulus, psi | 3.44 × $10^5$ (242 × $10^6$ kg/m$^2$) |
| Elongation at yield, % | 7.3 |
| Heat Distortion Temperature (unannealed) °C., 264 psi (186000 kg/m$^2$) | 155.6 |
| Izod Impact Strength ft./lb./inch (0.3 m/0.45 kg/2.54 cm) of notch | 4.8 |
| Intrinsic Viscosity dl./g. in symtetrachloroethane at 30°C | 0.51 |
| Yellowness Index | ca 27 |

Example 12

Following describes the process of the invention using the continuous mode:

An essentially stoichiometric mix of reactants is continuously charged to the melt tank, and oxygen is excluded by suitable purging with nitrogen. A catalyst solution prepared as in Example 11 and introduced to the first stirred reactor together with the liquid monomers. The reaction is conducted in the four reactors listed in Table 2 which are operated in series. Table 2 summarizes conditions used in each reactor at steady state.

TABLE 2

Reactor Summary

| Type | % Phenol Removal | Melt Viscosity, CP | Temp. °C | Pressure mmHgA | Mean Residence Time, HR |
|---|---|---|---|---|---|
| Melt Tank | 0 | 50 | 200 | 758 | 1.5 |
| Stirred Reactor 1 | 60.0 | 1,000 | 240 | 200 | 1 |
| Stirred Reactor 2 | 31.2 | 10,000 | 280 | 20 | 1 |
| Wiped Film I | 4.4 | 200,000 | 302 | 2 | — |
| Wiped Film II | 2.0 | 4,000,000 | 320 | 0.4 | — |

Also included in Table 2 are the sequential degrees of phenol removal which are effected in each reactor. The process produced about 20 pounds (9 kg) per hour of polyester having a final product I.V. of about 0.60 to 0.65 dl/g (sym. tetrachloroethane, 30°C.).

Unless otherwise indicated in this specification and claims, temperatures are in degrees centigrade and parts are by weight.

**Claims**

1. A process for preparing a linear aromatic polyester by transesterification polymerization of monomer reactants comprising a bisphenol and a diaryl ester of a dicarboxylic acid, at least one of the reactants being normally solid at 30°C. in the presence of a basic catalyst for said polymerization wherein said reactants are introduced into a polymerization wherein said reactants are introduced into a polymerization reaction zone in the liquid state, characterised in that a basic catalyst that is normally solid at 30°C. is added in liquid form to the reactants in the liquid state in the polymerization zone.

2. A process for preparing a linear aromatic polyester by transesterification polymerization of monomer reactants comprising a bisphenol and a diaryl ester of a dicarboxylic acid, at least one of the reactants being normally solid at 30°C, in the presence of a basic catalyst for said polymerization wherein said reactants are introduced into a polymerization reaction zone in the liquid state, characterised by separately but substantially concurrently introducing the catalyst and the liquid state reactants into the polymerization reaction zone.

3. A process according to claim 2 wherein at least one reactant is melted prior to mixing with the catalyst.

4. A process according to claim 1, 2 or 3 wherein the bisphenol is bisphenol A.

5. A process according to any one of claims 1 to 4 wherein the diaryl ester is diphenyl isophthalate, diphenyl terephthalate or a mixture thereof.

6. A process according to any one of the preceding claims wherein the catalyst, normally solid at 30°C, is introduced in molten form.

7. A process according to any one of claims 1 to 5, wherein the catalyst, normally solid at 30°C, is introduced in solution in a solvent for the catalyst.

8. A process according to claim 7 wherein the catalyst is a metal phenoxide introduced as a solution in phenol.

9. A process according to claim 8 wherein the metal phenoxide is an alkali metal phenoxide selected from rubidium phenoxide, potassium phenoxide, lithium phenoxide and sodium phenoxide.

10. A process according to claim 7 wherein the catalyst comprises a reaction product of potassium borohydride and phenol.

**Patentansprüche**

1. Verfahren zur Herstellung eines linearen aromatischen Polyesters durch Umesterungs-Polymerisation von Monomerreaktanten, die ein Bisphenol und einen Diarylester einer Dicarbonsäure umfassen, wobei zumindest einer der Reaktanten unter Normalbedingungen bei 30°C fest ist, in Gegenwart eines basischen Katalysators für diese Polymerisation, wobei die Reaktanten im flüssigen Zustand in eine Polymerisationszone eingeführt werden, dadurch gekennzeichnet, daß ein basischer Katalysator, der unter Normalbedingungen bei 30°C fest ist, in flüssiger Form den in flüssiger Form befindlichen Reaktanten in der Polymerisationszone zugesetzt wird.

2. Verfahren zur Herstellung eines linearen aromatischen Polyesters durch Umesterungs-Polymerisation von Monomerreaktanten, die ein Bisphenol und einen Diarylester einer Dicarbonsäure umfassen, wobei zumindest einer der Reaktanten unter Normalbedingungen bei 30°C fest ist, in Gegenwart eines basischen Katalysators für diese Polymerisation, wobei die Reaktanten im flüssigen Zustand in eine Polymerisationszone eingeführt werden, dadurch gekennzeichnet, daß getrennt, jedoch im wesentlichen gleichzeitig der Katalysator und die Reaktanten im flüssigen Zustand in die Polymerisations-Reaktionszone eingeführt werden.

3. Verfahren nach Anspruch 2, worin mindestens einer der Reaktanten vor dem Vermischen mit dem Katalysator geschmolzen wird.

4. Verfahren nach Anspruch 1, 2 oder 3, worin das Bisphenol das Bisphenol A ist.

5. Verfahren nach einem der Ansprüche 1 bis 4, worin der Diarylester das Diphenylisophthalat, Diphenylterephthalat oder ein Gemisch davon ist.

6. Verfahren nach einem der voranstehenden Ansprüche, worin der Katalysator, der unter Normalbedingungen bei 30°C fest ist, in geschmolzener Form eingeführt wird.

7. Verfahren nach einem der Ansprüche 1 bis 5 worin der Katalysator, der unter Normalbedingungen bei 30°C fest ist, in Lösung in einem Lösungsmittel für den Katalysator eingeführt wird.

8. Verfahren nach Anspruch 7, worin der Katalysator ein Metallphenoxid ist, welches als eine Lösung in Phenol eingeführt wird.

9. Verfahren nach Anspruch 8, worin das Metallphenoxid ein Alkalimetallphenoxid ist, welches ausgewählt ist unter Rubidiumphenoxid, Kaliumphenoxid, Lithiumphenoxid und Natriumphenoxid.

10. Verfahren nach Anspruch 7, worin der katalysator ein Reaktionsprodukt von Kaliumborhydrid und Phenol enthält.

**Revendications**

1. Procédé pour préparer un polyester aromatique linéaire par polymérisation par transestérification

de réactifs monomères comprenant un bisphénol et un ester diarylique d'un acide dicarboxylique, l'un au moins des réactifs étant normalement solide à 30°C, en la présence d'un catalyseur basique pour cette polymérisation, dans lequel on introduit ces réactifs dans une zone de réaction de polymérisation à l'état liquide, caractérisé en ce qu'on ajoute sous forme liquide un catalyseur basique qui est normalement solide à 30°C aux réctifs à l'etat liquide dans la zone de polymérisation.

2. Procédé pour préparer un polyester aromatique linéaire par polymérisation par transestérification de réactifs monomères comprenant un bisphénol et un ester diarylique d'un acide dicarboxylique, l'un au moins des réactifs étant normalement solide à 30°C, en la présence d'un catalyseur basique pour cette polymérisation, dans lequel les réactifs sont introduits dans une zone de réaction de polymérisation à l'état liquide, caractérisé en ce qu'on introduit séparément, mais pratiquement en même temps, le catalyseur et les réactifs à l'état liquide dans la zone de réaction de polymérisation.

3. Procédé selon la revendication 2, dans lequel l'un au moins des réactifs est fondu avant d'être mélangé au catalyseur.

4. Procédé selon la revendication 1, 2 ou 3, dans lequel le bisphénol est le bisphénol A.

5. Procédé selon l'une quelconque des revendications 1 à 4, dans lequel l'ester diarylique est l'isophthalate de diphényle, le terephthalate de diphényle ou un mélange des deux.

6. Procédé selon l'une quelconque des revendications précédentes, dans lequel le catalyseur, normalement solide à 30°C, est introduit à l'état fondu.

7. Procédé selon l'une quelconque des revendications 1 à 5, dans lequel le catalyseur, normalement solide à 30°C, est introduit en solution dans un solvant pour le catalyseur.

8. Procédé selon la revendication 7, dans lequel le catalyseur est un phénoxyde métallique introduit sous forme d'une solution dans le phénol.

9. Procédé selon la revendication 8, dans lequel le phénoxyde métallique est un phénoxyde d'un métal alcalin, choisi parmi les phénoxydes de rubidium, de potassium, de lithium et de sodium.

10. Procédé selon la revendication 7, dans lequel le catalyseur comporte un produit de réaction du borohydrure de potassium et d'un phénol.